Europäisches Patentamt

European Patent Office

Office européen des brevets

(19)

(11) Numéro de publication : **0 155 200**
**B1**

(12)

# FASCICULE DE BREVET EUROPÉEN

(45) Date de publication du fascicule du brevet :
04.05.88

(21) Numéro de dépôt : 85400192.2

(22) Date de dépôt : 05.02.85

(51) Int. Cl.⁴ : **F 27 B 15/10, B 01 J 8/24**

(54) **Dispositif d'alimentation en gaz d'une grille de fluidisation à plusieurs circuits de fluide.**

(30) Priorité : 07.02.84 FR 8401861

(43) Date de publication de la demande :
18.09.85 Bulletin 85/38

(45) Mention de la délivrance du brevet :
04.05.88 Bulletin 88/18

(84) Etats contractants désignés :
AT BE CH DE GB IT LI LU NL SE

(56) Documents cités :
DE-A- 2 155 898
DE-A- 3 228 345
DE-B- 2 253 575
GB-A- 2 118 454
US-A- 4 338 079

(73) Titulaire : **CHARBONNAGES DE FRANCE, Etablissement public dit:**
**Tour Albert 1er 65 avenue de Colmar**
**F-92507 Rueil Malmaison Cédex (FR)**

(72) Inventeur : **Kita, Jean-Claude**
**12, rue Voltaire**
**F-62980 Vermelles (Pas-de-Calais) (FR)**
Inventeur : **Puff, Roger**
**12 bis, rue du Pôle Nord**
**F-62300 Lens (Pas-de-Calais) (FR)**

(74) Mandataire : **Chevallier, Robert Marie Georges et al**
**Cabinet BOETTCHER 23, rue La Boétie**
**F-75008 Paris (FR)**

Jouve, 18, rue St-Denis, 75001 Paris, France

## Description

L'invention a pour objet un dispositif d'alimentation en gaz d'une grille de fluidisation à deux circuits distincts au moins ayant chacun de multiples orifices de sortie.

Une telle grille est utilisable, par exemple mais non obligatoirement, dans un foyer de combustion de combustible granuleux du type décrit dans le brevet FR-A- 82 00815 du demandeur. Dans cette grille un premier circuit de soufflage d'air — qui est l'air de fluidisation — se termine par un grand nombre d'orifices situés dans un premier plan de la grille et un second circuit de soufflage d'air se termine par un grand nombre d'orifices situés de préférence dans un second plan de la grille placé à un niveau supérieur au niveau du premier plan, par exemple, les orifices du second circuit se trouvent à des niveaux différents par rapport à des troncs de pyramide qui s'élèvent en alternance à partir de la surface de la grille.

L'avantage essentiel apporté par une telle grille est qu'elle permet de régler l'allure de la combustion et la puissance du foyer dans une gamme étendue au moyen du réglage du débit d'air par l'un et par l'autre circuit. Si on tient compte qu'il est souhaitable de réguler le débit respectif de chaque circuit et, aussi, de réguler le débit soufflé par certains orifices par rapport à d'autres orifices appartenant au même circuit, on constate que l'on doit utiliser un nombre élevé de vannes et de diaphragmes de réglage de débit dont la gestion devient un véritable problème.

Le but principal de l'invention est d'apporter un dispositif qui facilite grandement le contrôle du soufflage de l'air par des orifices différents de l'un et de l'autre circuit et, ainsi, le réglage du débit total d'air fourni à la grille.

Dans un dispositif d'alimentation en gaz d'une grille de fluidisation ayant au moins deux circuits distincts d'alimentation comprenant chacun des orifices de soufflage à l'extrémité d'une tubulure correspondante alimentée à partir d'une canalisation d'alimentation, les orifices de chacun des circuits étant réunis par groupes de plusieurs orifices homologues, selon l'invention ce dispositif comprend en relation avec chaque groupe d'orifices :

a) un corps statorique allongé qui est constitué par un cylindre raccordé en des points de raccordement espacés dans son sens longitudinal, le long d'une ligne déterminée, à chacun des orifices du groupe correspondant par une tubulure de raccordement,

b) un corps tubulaire rotorique qui est supporté dans le cylindre et accouplé à un moteur destiné à mettre en correspondance, par rotation, avec la ligne des points de raccordement du stator, l'une quelconque d'un ensemble de lignes longitudinales prédéterminées espacées en sens circonférentiel de ce corps tubulaire rotorique, chacune de ces lignes étant pourvue d'un nombre différent d'ouvertures de passage de gaz en correspondance avec les points de raccordement du cylindre statorique, à l'exception de la première ligne qui ne comporte aucune ouverture, chaque position prédéterminée successive du rotor correspondant à une position d'alimentation d'un nombre croissant d'orifices du groupe d'orifices.

De préférence, chaque tube rotorique est accouplé à son moteur respectif par une de ses extrémités et il est raccordé par son extrémité opposée à une canalisation d'alimentation correspondante, des joints d'étanchéité étant disposés à ses deux extrémités pour assurer l'étanchéité par rapport au cylindre statorique.

Avantageusement, le cylindre statorique et le tube rotorique sont disposés concentriquement avec un faible jeu, en sens radial, cependant que les ouvertures de passage ont une section droite inférieure à la section des tubulures de raccordement.

Pour une grille de combustion de charbon granuleux fluidisé, un premier circuit est un circuit d'air comprimé de débouchage et un second circuit est un circuit d'air de fluidisation, les positions prédéterminées de réglage de débit correspondant pour l'air comprimé à l'alimentation successive d'un orifice après un autre orifice et correspondant pour l'air de fluidisation à l'alimentation progressive des orifices les uns après les autres, à partir d'un premier orifice jusqu'à l'ensemble des orifices.

Dans un mode de réalisation de l'invention, le corps statorique allongé est un cylindre raccordé en des points espacés dans son sens longitudinal le long d'une ligne déterminée, respectivement à chacun des orifices au moyen de tubulures correspondantes ayant un diamètre intérieur déterminé et le corps mobile de réglage de débit est un tube supporté concentriquement à l'intérieur du cylindre statorique pour pouvoir tourner dans celui-ci, ce tube rotorique étant raccordé à une extrémité à un collecteur d'arrivée d'air, accouplé à son extrémité opposée à un moteur d'entraînement en rotation, et ayant plusieurs lignes longitudinales déterminées espacées en sens circonférentiel, en nombre supérieur d'une unité au nombre des orifices composant un groupe ; ces lignes longitudinales correspondent à autant de positions déterminées qui peuvent être données au tube rotorique à l'intérieur du cylindre statorique par le moteur d'entraînement pour mettre chacune de ces lignes longitudinales à volonté en correspondance avec la ligne déterminée le long de laquelle se trouvent les tubulures de raccordement du cylindre statorique avec les orifices. Chaque ligne longitudinale sert au réglage du débit d'air, par exemple à partir d'une valeur nulle à tous les orifices à une valeur maximum par tous les orifices en passant par l'alimentation progressive d'un premier orifice, puis d'un deuxième orifice, puis d'un troisième, etc... A cette fin, des ouvertures de passage d'air sont prévues aux endroits voulus sur les lignes longitudinales déterminées pour pouvoir être mises en face des tubulures de raccordement ; ces ouvertures de passage ont, de préférence, une section droite inférieure à celle des tubulures de raccordement.

Dans une grille ayant deux circuits distincts de soufflage d'air, les orifices de chaque circuit sont répartis en groupes et chaque groupe est raccordé à un collecteur de réglage de débit comme expliqué ci-dessus. Dans le cas où il existerait un ou plusieurs autres circuits distincts, les orifices de chacun d'eux pourraient être groupés et raccordés comme on vient de le décrire, à un collecteur de réglage correspondant, l'invention n'étant nullement limitée à deux circuits.

On donnera maintenant, sans intention limitative et sans exclure aucune variante, une description d'un exemple de réalisation de l'invention en relation avec une grille à deux circuits de soufflage d'air. On se rapportera au dessin annexé dans lequel :

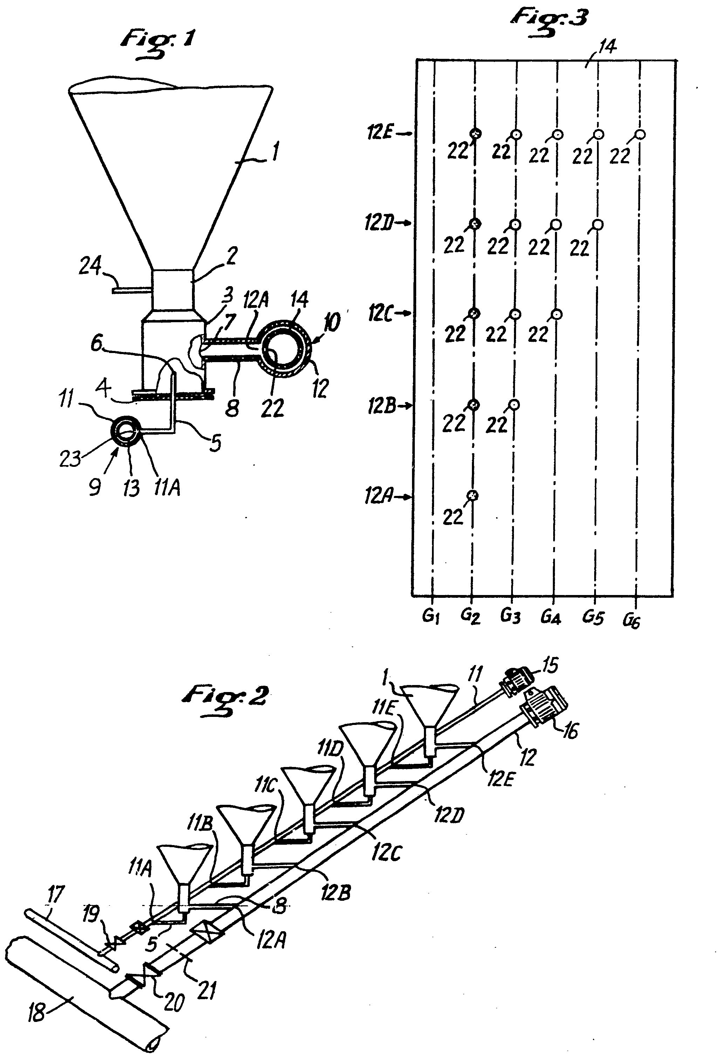

— la figure 1 est une vue en élévation, en partie en coupe, d'une partie d'une grille à deux circuits alimentés en air par des dispositifs conformes à l'invention,

— la figure 2 est une vue en perspective de deux groupes d'orifices alimentés en air par des dispositifs de la figure 1,

— la figure 3 est une figure qui représente un tube rotorique développé pour en montrer les ouvertures de passage d'air.

L'exemple décrit ici est celui d'une grille de fluidisation pour la combustion de charbon granuleux, composée d'un grand nombre de pyramides inversées 1 juxtaposées alimentées en air de fluidisation et en air comprimé par deux circuits distincts. Le nombre des pyramides d'une grille peut être élevé ; par exemple de l'ordre de 80 pour une chaudière de 50 t/h de vaporisation ou de 100 pour une chaudière de 80 t/h de vaporisation.

A la partie inférieure de chaque pyramide il existe un embout 2 pour le raccordement à une chambre de soufflage 3 fermée par un fond démontable 4. Au centre de ce dernier passe une tubulure 5, disposée axialement et dirigée vers la pyramide 1 pour se terminer dans la chambre 3 par un orifice 6 par lequel on envoie de l'air comprimé. Sur le côté de cette même chambre 3 débouche par un orifice latéral 7 une tubulure 8 par laquelle on souffle de l'air de fluidisation. L'air comprimé sert à déboucher ou à dégager les pyramides 1 après un arrêt ou après un ralentissement de la combustion ; quand la pyramide a été dégagée par l'air comprimé, on y envoie de l'air de fluidisation et on arrête le débit d'air comprimé.

Il ne s'agit là que d'un exemple, l'invention étant indépendante du type de grille et même, comme on l'a déjà dit, du nombre des circuits d'air propres à une grille et de la fonction précise de chaque circuit.

Selon l'invention, on réunit les orifices 6 d'un circuit et 7 d'un autre circuit respectivement en groupes de plusieurs unités, cinq dans cet exemple, et on les raccorde chacun respectivement à un collecteur 9, 10 de réglage de débit. Chacun de ces collecteurs 9, 10 comprend un cylindre statorique 11, 12 auquel se raccordent respectivement, en des points espacés le long d'une génératrice 11A à 11E et 12A à 12E, d'une part les tubulures 5, d'autre part les tubulures 8.

A l'intérieur de chaque cylindre statorique 11, 12 est monté concentriquement avec une possibilité de rotation un tube rotorique 13, 14 respectivement. A une extrémité, chaque tube rotorique est accouplé en rotation à l'arbre d'un moteur 15, 16 respectivement. A l'extrémité opposée chaque tube rotorique est raccordée à une canalisation d'alimentation, respectivement 17 pour l'air comprimé,.18 pour l'air de fluidisation. Des vannes d'arrêt 19, 20 et éventuellement des diaphragmes 21 sont montés entre chaque canalisation d'alimentation 17, 18 et chaque tube rotorique 13, 14 correspondant. Des joints d'étanchéité (non représentés) sont installés aux deux extrémités des cylindres statoriques 11, 12 pour en assurer l'étanchéité sans gêner la rotation des tubes rotoriques 13, 14 ni leur alimentation respectivement en air comprimé et en air de fluidisation.

En face de chacun des points de raccordement 11A à 11E et 12A à 12E des tubulures 5, 8 avec les cylindres statoriques 11, 12, il existe sur chaque tube rotorique 13, 14, une ligne circulaire sur laquelle on prévoit les moyens voulus pour assurer comme on le désire l'alimentation en air comprimé ou en air de fluidisation envoyé à chaque pyramide 5 du groupe, en fonction des conditions de fonctionnement.

La figure 3 montre le développement sur une surface plane du tube rotorique 14 fendu le long d'une génératrice. On a tracé en trait mixte 6 génératrices repérées $G_1$ à $G_6$ qui sont espacées de 60° les unes des autres.

La génératrice $G_1$ ne présente aucune ouverture de passage d'air ; sur la génératrice $G_2$ il y a cinq ouvertures 22 de passage d'air, sur la génératrice $G_3$ quatre ouvertures 22, sur la génératrice $G_4$ trois ouvertures 22, sur la génératrice $G_5$ deux ouvertures 22 et sur la génératrice $G_6$ une ouverture 22. Ces ouvertures 22 sont situées en correspondance avec les points de raccordement 12A et 12E. Elles sont identiques et elles ont chacune une section droite qui est inférieure à la section droite des tubulures 8 de raccordement, de sorte qu'elles jouent le rôle de diaphragme de réglage par rapport à ces dernières. Avantageusement, le cylindre statorique 11, 12 et le tube rotorique 13, 14 sont concentriques avec un faible jeu en sens radial.

Quand, à l'aide du moteur 16, le tube rotorique 14 a été déplacé en rotation pour que la génératrice $G_1$ se trouve face des tubulures 8, l'alimentation en air de fluidisation est interrompue. En déplaçant de la même façon les génératrices $G_2$ à $G_6$ on alimente à volonté cinq pyramides 1, ou quatre seulement, ou trois, ou deux ou une seule.

Le tube rotorique 13 possède également des ouvertures de passage 23 que l'on peut mettre à volonté en face des tubulures de raccordement 5, mais ces ouvertures 23 ne sont pas réalisées selon le même schéma parce que les besoins en air comprimé sont différents. Il existe six génératrices dont l'une n'a aucune ouverture, pour l'interruption de l'alimentation ; les cinq autres génératrices ont chacune une ouverture 23 seulement et ces ouvertures sont décalées de la distance séparant les pyramides 1, d'une génératrice à la suivante ; ainsi on ne peut alimenter en air comprimé qu'une pyramide 1 à la fois ; on alimente ces pyramides pour les déboucher successivement. Dès qu'une pyramide est débouchée, on l'alimente en air de fluidisation et on maintient ensuite cette alimentation en air de fluidisation des pyramides débouchées.

Dans une autre installation, la disposition des ouvertures de passage d'air pourrait être différente, en fonction de l'utilisation ; on remarquera que pour régler le débit à l'aide du dipositif de l'invention, le nombre des génératrices et des positions déterminées du tube rotorique 13, 14 à l'intérieur du cylindre statorique 11, 12 est supérieur d'une unité au nombre des orifices qui sont réunis en un groupe. Le choix d'une génératrice, qui est une ligne droite, pour y prévoir les ouvertures de passage 22 n'est pas obligatoires ; les ouvertures pourraient être réparties sur des lignes non rectilignes, hélicoïdales par exemple, pourvu que l'on puisse donner aux ouvertures les emplacements qu'elles doivent occuper pendant le fonctionnement.

Dans l'exemple décrit ici, les pyramides 1 ont aussi une tubulure 24 qui débouche dans l'embout 2 pour l'introduction dans le foyer d'un gaz ou d'eau. Le réglage de l'alimentation de ces tubulures 24 pourrait être fait aussi au moyen d'un dispositif conforme à l'invention. La disposition relative des dispositifs autour d'une grille dépend de la grille elle-même ; avec une grille carrée ou rectangulaire, les collecteurs de réglage de débit peuvent être disposés parallèlement ; avec une grille circulaire, il est préférable de les disposer selon des rayons.

## Revendications

1. Dispositif d'alimentation en gaz d'une grille de fluidisation ayant au moins deux circuits distincts d'alimentation comprenant chacun des orifices (6, 7) de soufflage à l'extrémité d'une tubulure correspondante (5, 8) alimentée à partir d'une canalisation d'alimentation (17, 18), les orifices (6, 7) de chacun des circuits étant réunis par groupes de plusieurs orifices homologues, caractérisé en ce qu'il comprend en relation avec chaque groupe d'orifices :

a) un corps statorique allongé qui est constitué par un cylindre (11, 12) raccordé en des points de raccordement espacés (11A à 11E, 12A à 12E) dans son sens longitudinal, le long d'une ligne déterminée, à chacun des orifices (6, 7) du groupe correspondant par une tubulure de raccordement (5, 8),

b) un corps tubulaire rotorique (13, 14) qui est supporté dans le cylindre (11, 12) et accouplé à un moteur (15, 16) destiné à mettre en correspondance, par rotation, avec la ligne des points de raccordement du stator (11A à 11E, 12A à 12E), l'une quelconque d'un ensemble de lignes longitudinales prédéterminées (G₁ à G₆) espacées en sens circonférentiel de ce corps tubulaire rotorique, chacune de ces lignes (G₁ à G₆) étant pourvue d'un nombre différent d'ouvertures (22) de passage de gaz en correspondance avec les points de raccordement (11A à 11E, 12A à 12E) du cylindre statorique 11, 12), à l'exception de la première ligne (G₁) qui ne comporte aucune ouverture, chaque position prédéterminée successive du rotor correspondant à une position d'alimentation d'un nombre croissant d'orifices du groupe d'orifices.

2. Dispositif selon la revendication 1, caractérisé en ce que chaque tube rotorique (13, 14) est accouplé à son moteur respectif (15, 16) par une de ses extrémités et il est raccordé par son extrémité opposée à une canalisation d'alimentation correspondante (17, 18), des joints d'étanchéité étant disposés à ses deux extrémités pour assurer l'étanchéité par rapport au cylindre statorique (11, 12).

3. Dispositif selon la revendication caractérisé en ce que le cylindre statorique (11, 12) et le tube rotorique (13, 14) sont disposés concentriquement avec un faible jeu, en sens radial, cependant que les ouvertures de passage (22) ont une section droite inférieure à la section des tubulures de raccordement (5, 8).

4. Dispositif selon la revendication 1 pour une grille de combustion de charbon granuleux fluidisé, caractérisé en ce qu'un premier circuit est un circuit d'air comprimé de débouchage et un second circuit est un circuit d'air de fluidisation, les positions prédéterminées de réglage de débit correspondant pour l'air comprimé à l'alimentation successive d'un orifice (6) après un autre orifice (6) et correspondant pour l'air de fluidisation à l'alimentation progressive des orifices (7) les uns après les autres, à partir d'un premier orifice jusqu'à l'ensemble des orifices.

## Claims

1. Apparatus for the supply of gas for a fluidisation grid having at least two separate supply circuits each comprising blowing orifices (6, 7) at the end of a corresponding pipe (5, 8) supplied from a supply conduit (17, 18), the orifices (6, 7) of each of the circuits being combined in groups of a plurality of homologous orifices, characterised in that it comprises in relation to each group of orifices :

a) an elongate stator body which is formed by a cylinder (11, 12) connected at connecting points (11A to 11E, 12A to 12E) which are spaced in its longitudinal direction along a given line, to each of the orifices (6, 7) of the corresponding group by a connecting pipe (5, 8), and

b) a tubular rotor body (13, 14) which is supported in the cylinder (11, 12) and coupled to a motor (15, 16) which is intended by rotary movement to bring into a position of correspondence with the line of the connecting points of the stator (11A to 11E, 12A to 12E), any one of an assembly of predetermined longitudinal lines ($G_1$ to $G_6$) which are spaced in the circumferential direction of the tubular rotor body, each of said lines ($G_1$ to $G_6$) being provided with a different number of gas flow openings (22) corresponding to the connecting points (11A to 11E, 12A to 12E) of the stator cylinder (11, 12) except for the first line ($G_1$) which does not have any opening, each successive predetermined position of the rotor corresponding to a supply position of an increasing number of orifices of the group of orifices.

2. Apparatus according to claim 1 characterised in that each rotor tube (13, 14) is coupled to its respective motor (15, 16) by one of its ends and it is connected by its opposite end to a corresponding supply conduit (17, 18), sealing joints being disposed at its two ends to provide for sealing thereof with respect to the stator cylinder (11, 12).

3. Apparatus according to claim 1, characterised in that the stator cylinder (11, 12) and the rotor tube (13, 14) are disposed concentrically with a slight clearance in the radial direction while the flow openings (22) are of a cross section which is less than the section of the connecting pipes (5, 8).

4. Apparatus according to claim 1 for a grid for the combustion of fluidised granular coal characterised in that a first circuit is a clearing compressed air circuit and a second circuit is a fluidisation air circuit, the predetermined flow regulating positions corresponding for the compressed air to the successive supply of one orifice (6) after another orifice (6) and corresponding for the fluidisation air to the progressive supply of the orifices (7) one after the other, from a first orifice to all of the orifices.

**Patentansprüche**

1. Vorrichtung zur Versorgung eines Wirbelschichtrostes mit Gas mit wenigstens zwei unterschiedlichen Fluidversorgungskreisen, die jeweils Blasöffnungen (6, 7) am Ende eines entsprechenden Stutzens (5, 8) aufweisen, der aus einem Versorgungskanal (17, 18) gespeist ist, wobei die Öffnungen (6, 7) jedes der Kreise über Gruppen mehrerer homologer Öffnungen vereinigt sind, dadurch gekennzeichnet, daß sie, bezogen auf jede Gruppe von Öffnungen, umfaßt :

a) einen länglichen Statorkörper, der von einem Zylinder (11, 12) gebildet ist, der an unter Abstand angeordneten Punkten (11A bis 11E, 12A bis 12E) in seiner Längsrichtung gesehen ist, längs einer bestimmten Linie mit jeder der Öffnungen (6, 7) der entsprechenden Gruppe über einen Verbindungsstutzen (5, 8) verbunden ist,

b) einen röhrenförmigen Rotorkörper (13, 14), der im Zylinder (11, 12) abgestützt und mit einem Motor (15, 16) gekuppelt ist, der dazu bestimmt ist, durch Drehung mit der Linie der Verbindungspunkte des Status (11A bis 11E, 12A bis 12E) eine beliebige aus einer Anordnung von vorbestimmten Längslinien ($G_1$ bis $G_6$) in Verbindung zu setzen, die in Umfangsrichtung dieses röhrenförmigen Rotorkörpers unter Abstand angeordnet sind, wobei jede dieser Linien ($G_1$ bis $G_6$) mit einer unterschiedlichen Anzahl von Gasdurchgangsöffnungen (22) entsprechend den Verbindungspunkten (11A bis 11E, 12A bis 12E) des Statorzylinders (11, 12), ausgenommen der ersten Linie ($G_1$), versehen ist, die keinerlei Öffnung aufweist, wobei jede vorbestimmte aufeinanderfolgende Stellung des Rotors einer Versorgungsstellung einer ansteigenden Anzahl von Öffnungen der Gruppe von Öffnungen entspricht.

2. Vorrichtung nach Anspruch 1, dadurch gekennzeichnet, daß jedes Rotorrohr (13, 14) mit seinem jeweiligen Motor (15, 16) über eines seiner Enden gekuppelt ist und mit seinem gegenüberliegenden Ende mit einem entsprechenden Versorgungskanal (17, 18) verbunden ist, wobei Dichtungsausbildungen an seinen beiden Enden angeordnet sind, um die Dichtung, bezogen auf den Statorzylinder (11, 12), sicherzustellen.

3. Vorrichtung nach Anspruch 1, dadurch gekennzeichnet, daß der Statorzylinder (11, 12) sowie das Rotorrohr (13, 14) konzentrisch bei geringem Spiel, in Radialrichtung gesehen, angeordnet sind, während die Durchgangsöffnungen (22) einen Querschnitt kleiner als der Querschnitt der Verbindungsstutzen (5, 8) aufweisen.

4. Vorrichtung nach Anspruch 1, für einen Verbrennungsrost für im Wirbelzustand befindliche granulatförmige Kohle, dadurch gekennzeichnet, daß ein erster Kreis ein Druckluftfreimachekreis und ein zweiter Kreis ein Wirbelschichtluftkreis ist, wobei die vorbestimmten Stellungen für die Einstellung des Duchsatzes für die Druckluft der aufeinanderfolgenden Versorgung der einen Öffnung (6) nach einer Öffnung (6) entsprechen und für die Wirbelluft der progressiven Versorgung der Öffnungen (7) nacheinander, ausgehend von einer ersten Öffnung bis zur Gruppe der Öffnungen, entsprechen.

Fig. 1

Fig. 3

Fig. 2